# FASCICULE DE BREVET EUROPEEN

(11) **EP 0 847 318 B1**
(45) Date de publication et mention de la délivrance du brevet: **17.03.1999**
(21) Numéro de dépôt: 96929379.4
(22) Date de dépôt: 29.08.1996
(51) Int. Cl.: B23K 26/00

(54) **PROCEDE POUR AMELIORER LA REFLECTIVITE D'UNE TOLE D'ALUMINIUM**
VERFAHREN ZUR VERBESSERUNG DER REFLEKTIONSEIGENSCHAFTEN EINES ALUMINIUM-BLECHES
METHOD FOR IMPROVING THE REFLECTIVITY OF AN ALUMINIUM SHEET

(30) Priorité: 31.08.1995 FR 9510404
(43) Date de publication de la demande: 17.06.1998
(73) Titulaire: PECHINEY RHENALU, 92400 Courbevoie (FR)
(72) Inventeur: TERRONI, Serge, F-38490 Les Abrets (FR); FILLON, Bertrand, F-38140 Saint-Blaise-du-Buis (FR); THORNE, Nicholas, F-38130 Echirolles (FR)
(74) Mandataire: Mougeot, Jean-Claude
(86) Numéro de dépôt international: FR9601329
(87) Numéro de publication internationale: WO9707925

(56) Documents cités:
- WO-A-89/05707
- DE-A- 3 922 377
- APPLIED OPTICS, vol. 32, no. 36, 20 Décembre 1993, NEW YORK US, pages 7462-7470, XP000425819 G. KINGSMAN ET AL.: "Treatment of metal surfaces with excimer laser radiation for radiative applications."

## Description

### Domaine technique

L'invention concerne un traitement par laser de la surface d'une tôle ou bande en aluminium ou en alliage d'aluminium dans le but d'en améliorer la réflectivité.

### Etat de la technique

Il est connu d'utiliser un traitement par laser pour modifier les propriétés de surface des pièces métalliques en vue, par exemple, d'en améliorer la dureté ou la résistance à l'abrasion ou à la corrosion.

En particulier les lasers excimer, qui émettent à une faible longueur d'onde dans l'ultra-violet et permettent ainsi de dégager des énergies considérables pendant un temps très court, ont été utilisés dans divers traitements de surface.

Ainsi, l'article de H.W. BERGMANN et al. "Modification of surface films on metallic substrates by excimer laser irradiation" paru dans Thin Solid Films, vol. 174, 1989, pp. 33-38, décrit l'irradiation de films en alliage Cu-Cr obtenus par pulvérisation cathodique et met en évidence une réduction de la microrugosité en deçà du seuil d'occurrence d'un plasma métallique.

Le brevet DE 3922377 de la société AUDI concerne un procédé de polissage optique de pièces métalliques à l'aide d'un laser excimer dans le but d'éliminer les défauts de surface. Il cite en exemple des blocs-moteurs en fonte, des chemises de cylindres en alliage Al-Si et des pièces en CuFe₂. Le traitement se fait avec une densité d'énergie par unité de surface proche de la densité d'energie critique qui conduit à l'apparition d'un plasma métallique. La densité d'energie est comprise, pour un laser à XeCl de longueur d'onde 308 nm, entre 0,1 et 30 10⁷ W/cm², et de préférence 0,5 10⁷ W/cm², dans le cas des pièces en alliage AlSi.

### Objet de l'invention

Les inventeurs ont constaté que le traitement de la surface d'une tôle ou bande d'aluminium ou d'alliage d'aluminium par un laser excimer, dans des conditions de fonctionnement très spécifiques bien différentes de celles de l'art antérieur, permettait d'améliorer de manière significative la réflectivité de cette surface.

Le procédé selon l'invention consiste à irradier la surface de la tôle ou de la bande à l'aide d'un faisceau émis par un laser excimer, de manière homogène sur toute la surface et perpendiculairement à celle-ci, avec une ou plusieurs impulsions de densité d'énergie comprise, pour une longueur d'onde du faisceau laser de 308 nm, entre 2 et 8 J/cm².

En dessous d'une densité d'énergie - seuil dont la valeur se situe entre 2 et 4 J/cm² selon l'alliage d'aluminium à traiter, l'énergie n'est pas suffisante pour obtenir l'effet recherché sur la réflectivité. Au dessus d'une densité d'énergie - limite qui se situe, en fonction de l'alliage à traiter, entre 4 à 8 J/cm², on risque de dégrader la surface, dont la rugosité se remet à augmenter. Il en est de même si, pour une énergie comprise entre l'énergie-seuil et l'énergie-limite, des impulsions multiples sont appliquées à la surface, et cela se produit d'autant plus tôt que l'énergie par unité de surface est plus élevée.

Si la longueur d'onde du faisceau laser est inférieure à 308 nm, par exemple 249 nm pour un laser au KrF ou 193 nm pour un laser au ArF, on a déterminé qu'on obtient le même effet avec 3 fois moins de photons à 193 nm qu'à 308 nm et on peut estimer que la relation est linéaire entre ces 2 valeurs.On utilise de préférence un faisceau homogénéisé et focalisé sur une surface supérieure ou égale à 10 x 10 mm, et même à 100 x 100 mm si la puissance du laser le permet, mais on obtient le même effet avec une tache lumineuse de petite taille. On constate par ailleurs qu'il est préférable que le faisceau soit polarisé dans une direction perpendiculaire au sens du laminage de la tôle.

L'utilisation de ce traitement conduit à une réduction d'au moins 50% de la rugosité moyenne de la surface de la tôle d'aluminium, ce qui correspond à un gain de l'ordre de 25 à 30% de la réflectivité.

L'invention permet d'obtenir une tôle ou bande en alliage d'aluminium laminée à froid, présentant après traitement, par mesure en réflectométrie laser, une réduction de longueur de comète d'au moins 20% sans modification de la tache spéculaire.

L'invention sera décrite de manière plus détaillée à l'aide de l'exemple ci-dessous.

### Exemple

On a utilisé un laser excimer VEL 1-K de la société SOPRA, de puissance 1 kW, sous une fréquence de 100 Hz, au XeCl de 308 nm de longueur d'onde. La section du faisceau avant focalisation était de 80 x 60 mm. On a travaillé avec un faisceau focalisé et homogénéisé, de manière à obtenir une densité de puissance parfaitement identique sur toute la zone traitée qui, pour chacun des tirs, était de 10 x 10 mm.

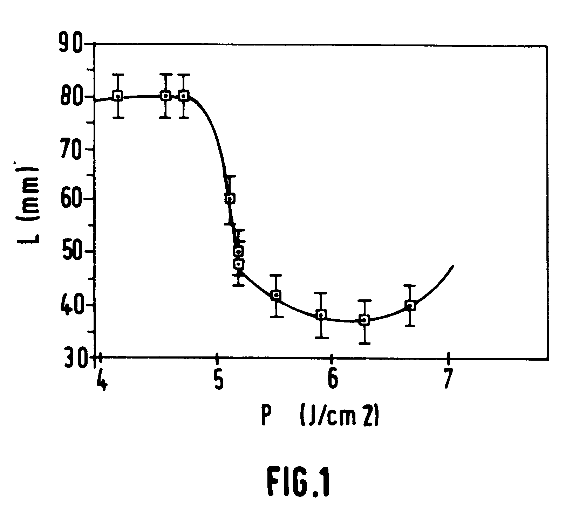

Les essais ont été menés sur des tôles laminées à froid d'épaisseur 1 mm en alliage 1085 selon la désignation de l'Aluminum Association. On a effectué les caractérisations suivantes:
a) On a comparé à l'aide d'un microscope électronique à balayage les surfaces d'une tôle non traitée, puis d'une tôle irradiée au laser excimer avec des densités d'énergie respectives de 3,7 et 5,2 J/cm² et, dans chacun des cas, 1 tir unique d'une durée de 170 ns et 16 tirs successifs de 170 ns chacun.
   On constate que les lignes dues au laminage s'estompent d'autant plus vite que la densité d'énergie est plus élevée et qu'elles ont totalement disparu à 5,2 J/cm². Par contre, quand on augmente le nombre de tirs, on crée une nouvelle rugosité de type isotrope, avec des creux et des bosses, dont le pas est de l'ordre de 3 à 4 microns.
b) On a également comparé les surfaces avant et après traitement en réflectométrie laser. Le principe de cette mesure consiste à envoyer sur la surface un rayon laser et à analyser le rayonnement réfléchi.
   Dans le cas d'un miroir parfait, l'image réfléchie est un point. Dans le cas où la surface présente une orientation directionnelle, comme par exemple une tôle laminée ou brossée, l'image réfléchie a la forme d'une comète, dont la longueur est liée au pas de la rugosité, et la largeur à la profondeur du sillon.
   On a utilisé pour cette mesure un laser HeNe de 632 nm de longueur d'onde et de puissance 3,5 milliwatts. La prise de vues a été faite avec un film Polaroîd type 667, une ouverture F 4,7 à 1/8 s. La distance entre l'échantillon et l'écran était de 2 m.
   On a mesuré les longueurs de comètes en fonction de l'énergie par unité de surface pour des tirs uniques de 170 ns. Les résultats sont représentés à la figure 1. On constate que jusqu'à une valeur de 4,8 J/cm², la longueur de la comète reste constante à environ 80 mm, puis elle décroît nettement.
   Au delà de 5,2 J/cm² où elle est d'environ 50 mm, elle continue à décroître légèrement avant de croître à nouveau, mais on constate alors une modification de la tache spéculaire qui s'élargit, ce qui indique que la réduction de la rugosité directionnelle est suivie de l'apparition d'une autre forme de rugosité non directionnelle. L'optimum de traitement correspond ainsi à une réduction d'environ 40% de la longueur de la comète sans déformation de la tache spéculaire.
   Si les valeurs absolues des longueurs de comète dépendent des conditions de l'essai de réflectométrie laser, le taux de réduction de cette longueur de comète est indépendant de ces conditions.
c) Une étude en spectrophotométrie montre que la reflectivité augmente quand la densité de puissance augmente jusqu'à un optimum pour ensuite se dégrader à trop forte puissance. Le principe de cette mesure est de comparer, pour chaque longueur d'onde du spectre visible, le rapport (en %) de la réflectivité par rapport à la réflectivité d'un miroir de référence de qualité moyenne, préalablement étalonnée.

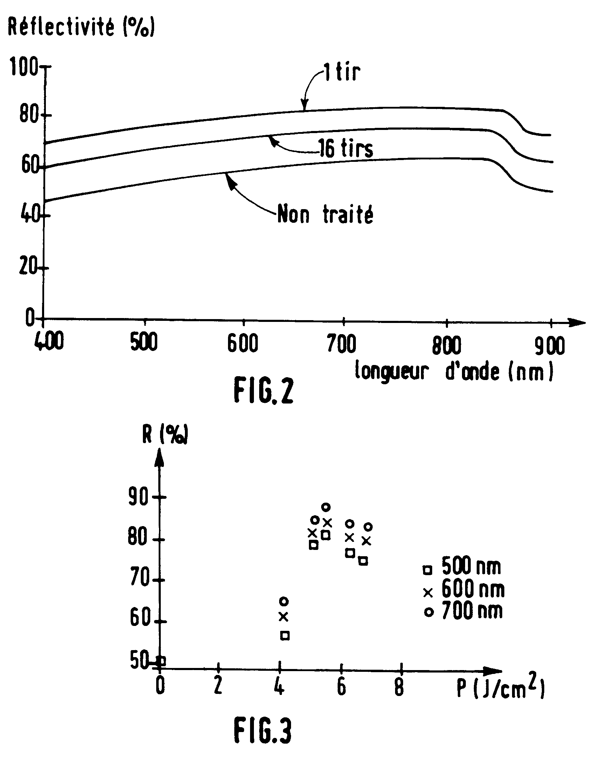

La figure 2 montre la courbe de la réflectivité en fonction de la longueur d'onde dans le spectre visible pour un échantillon non traité et pour un échantillon traité avec une densité d'énergie de 5,2 J/cm² avec respectivement 1 tir unique et 16 tirs successifs de 170 ns chacun. On constate que la courbe correspondant au tir unique se situe au-dessus des 2 autres.

La figure 3 montre, pour 3 longueurs d'onde différentes (500, 600 et 700 nm) l'évolution de la reflectivité en fonction de la densité d'énergie à tir unique de 170 ns. On constate que, quelle que soit la longueur d'onde, la réflectivité passe par un maximum situé autour de 5,5 J/cm².

On peut estimer, à l'aide des modèles théoriques connus de l'homme de métier reliant la courbe de réflectivité à la rugosité du métal, que cette rugosité passe d'une valeur moyenne avant traitement de 23 nm à une valeur moyenne de 9,5 nm après traitement dans les conditions optimales définies ci-dessus.

## Revendications

1. Procédé pour améliorer la réflectivité d'une tôle ou bande d'aluminium ou d'alliage d'aluminium consistant à irradier la surface de la tôle ou de la bande à l'aide d'un faisceau émis par un laser excimer, de manière homogène sur la surface traitée et perpendiculairement à celle-ci, avec une ou plusieurs impulsions de densité d'énergie comprise, pour une longueur d'onde du faisceau laser de 308 nm, entre 2 et 8 J/cm².

2. Procédé selon la revendication 1, caractérisé en ce que le faisceau laser est homogénéisé et focalisé sur une surface supérieure ou égale à 10 x 10 mm.

3. Procédé selon la revendication 2, caractérisé en ce que le faisceau laser est focalisé sur une surface supérieure à 100 x 100 mm.

4. Procédé selon l'une des revendications 1 à 3, caractérisé en ce que le faisceau est polarisé dans une direction perpendiculaire au sens du laminage de la tôle.

5. Procédé selon l'une des revendications 1 à 4, caractérisé en ce que la tôle ou bande en alliage d'aluminium est laminée à froid et présente après traitement, par mesure en réflectométrie laser, une réduction d'au moins 20% de la longueur de comète sans modification de la tache spéculaire.

## Claims

1. Process to improve the reflectivity of an aluminum or aluminum alloy plate or strip consisting of irradiating the surface of the plate or strip by a beam emitted by an excimer laser, homogeneously over the treated surface and perpendicular to it, with one or several pulses with an energy density of between 2 and 8 J/cm², for a laser beam wave length of 308 nm.

2. Process according to claim 1, characterized in that the laser beam is homogenized and focused on an area equal to or greater than 10 x 10 mm.

3. Process according to claim 2, characterized in that the laser beam is focused on an area greater than 100 x 100 mm.

4. Process according to one of claims 1 to 3, characterized in that the beam is polarized in a direction perpendicular to the plate rolling direction.

5. Process according to one of claims 1 to 4, characterized in that the aluminum alloy plate or strip is cold rolled and, after treatment, has a reduction equal to at least 20% of the comet length by laser reflectrometry measurement, without any modification to the specular spot.

## Patentansprüche

1. Verfahren zur Verbesserung der Reflexionseigenschaften eines Bleches oder Bandes aus Aluminium oder Aluminiumlegierung, bei dem die Oberfläche des Bleches oder Bandes mit einem von einem Excimerlaser ausgestrahlten Strahl gleichmäßig auf der behandelten Oberfläche und quer zu dieser, mit einem oder mehreren Impulsen einer Energiedichte, die für eine Wellenlänge des Laserstrahls von 308 nm im Bereich von 2 bis 8 J/cm² liegt, bestrahlt wird.

2. Verfahren nach Anspruch 1, dadurch gekennzeichnet, daß der Laserstrahl homogenisiert und auf eine Oberfläche größer oder gleich 10 x 10 mm ausgerichtet wird.

3. Verfahren nach Anspruch 2, dadurch gekennzeichnet, daß der Laserstrahl auf eine Oberfläche größer als 100 x 100 mm ausgerichtet wird.

4. Verfahren nach einem der Ansprüche 1 bis 3, dadurch gekennzeichnet, daß der Strahl in eine quer zur Walzrichtung des Bleches verlaufende Richtung polarisiert wird.

5. Verfahren nach einem der Ansprüche 1 bis 4, dadurch gekennzeichnet, daß das Blech oder Band aus Aluminiumlegierung kaltgewalzt wird und nach der Behandlung, durch Messung mit dem Laserreflektometer, eine um 20 % reduzierte Kometlänge ohne Veränderung des spiegelnden Fleckes aufweist.
